# EUROPEAN PATENT SPECIFICATION

(11) **EP 3 957 842 B1**
(45) Date of publication and mention of the grant of the patent: **31.07.2024**
(21) Application number: 21191993.1
(22) Date of filing: 18.08.2021
(51) Int. Cl.: F02C 7/25, F16L 5/10

(54) **AIRCRAFT FIREWALL FEEDTHROUGH DEVICE**
DURCHGANGSVORRICHTUNG FÜR FLUGZEUGBRANDWAND
DISPOSITIF DE PASSAGE DE PARE-FEU D'AÉRONEF

(30) Priority: 19.08.2020 US 202016997360
(43) Date of publication of application: 23.02.2022
(73) Proprietor: PRATT & WHITNEY CANADA CORP., Longueuil, Québec J4G 1A1 (CA)
(72) Inventor: BASSE, Olivier, (01BE5) Longueuil, J4G 1A1 (CA)
(74) Representative: Dehns

(56) References cited:
- EP-A1- 2 860 412
- EP-A1- 3 193 419
- WO-A1-03/013658
- US-A- 4 249 353
- US-A1- 2016 180 988

## Description

### TECHNICAL FIELD

The disclosure (invention) relates generally to feedthrough devices, and more particularly to a device for accommodating one or more feedthrough members through a wall such as a firewall of an aircraft.

### BACKGROUND

Gas turbine engines typically include one or more firewalls separating relatively cool non-fire zones from an ignition or fire zone that can include a combustor or other relatively hot section of the gas turbine engine. A firewall may also be disposed on an airframe to protect an aircraft or other mobile platform to which the gas turbine engine is mounted. Despite the fire and non-fire zones being separated by firewalls, engine and/or aircraft systems require electric and/or fluid communication across the firewalls. The electric and/or fluid communication can include electric wires, fuel lines, air lines and oil lines for example. The electric and/or fluid communication is typically established by way of suitable feedthrough systems. Existing feedthrough systems across firewalls can be relatively cumbersome and can also complicate maintenance tasks. Improvement is desirable.

Prior art feedthrough systems are disclosed in documents US2016/180988 A1, US4249353 A, EP2860412 A1, EP3193419 A1 and WO03/013658 A1.

### SUMMARY

In one aspect, the invention includes an aircraft firewall feedthrough device as claimed in claim 1, and in another aspect the invention includes a wire harness as claimed in claim 13. In further aspects, the invention includes an aircraft engine as claimed in claim 14 or 15. Various embodiments of the invention are defined in the dependent claims.

Further details of these and other aspects of the subject matter of this application will be apparent from the detailed description included below and the drawings.

### DESCRIPTION OF THE DRAWINGS

Reference is now made to the accompanying drawings, in which:
FIG. 1 shows a schematic axial cross-section view of an exemplary turboprop gas turbine engine including one or more aircraft firewall feedthrough devices as described herein;
FIGS. 2A-2E are schematic illustrations of exemplary aircraft firewall feedthrough devices attached to a firewall;
FIG. 3 is a schematic illustration of another exemplary aircraft firewall feedthrough device attached to two firewalls;
FIG. 4 is a perspective view of the device of FIG. 2A;
FIG. 5 is another perspective view of the device of FIG. 2A;
FIG. 6 is a cross-sectional view of the device of FIG. 2A taken along line 6-6 in FIG. 4;
FIG. 7 is an enlarged cross-sectional view of a portion of the device of FIG. 2A taken along line 6-6 of FIG. 4; and
FIG. 8 is an enlarged cross-sectional view of a portion of the device of FIG. 2A taken along line 8-8 of FIG. 4.

### DETAILED DESCRIPTION

The following disclosure describes devices for (e.g., sealingly) accommodating one or more feedthrough members through an aperture of a wall. In some embodiments, the devices described herein may provide suitable sealing between the wall and the feedthrough members, and may be used to accommodate feedthrough members through firewalls of aircraft engines, aircraft and other mobile platforms, or other suitable applications. For example, some embodiments of the device may provide suitable sealing performance to hinder or prevent flame and/or vapor migration from one side of a firewall to the other. In some embodiments, the devices disclosed herein may have a relatively simple and economical construction that can also facilitate installation and maintenance tasks. Aspects of various embodiments are described through reference to the drawings.

The terms "connected", "attached" or "coupled" may include both direct connection, attachment or coupling (in which two elements contact each other) and indirect connection, attachment or coupling (in which at least one additional element is disposed between the two elements).

The term "substantially" as used herein may be applied to modify any quantitative representation which could permissibly vary without resulting in a change in the basic function to which it is related.

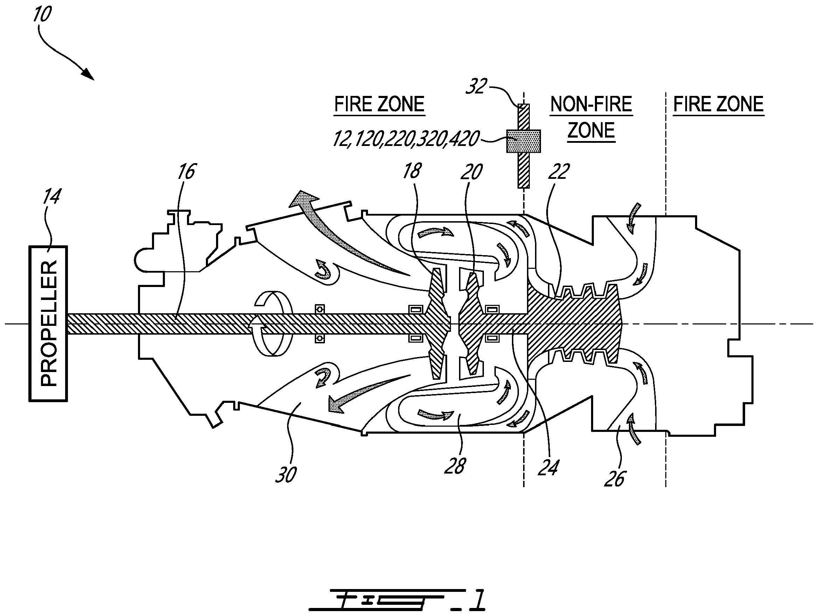

FIG. 1 is a schematic axial cross-section view of an exemplary reverse flow turboprop gas turbine engine 10 including one or more aircraft firewall feedthrough devices 12, 120, 220, 320, 420 and 520 as described herein. Even though the following description and accompanying drawings specifically refer to a turboprop gas turbine engine as an example, it is understood that aircraft firewall feedthrough devices 12, 120, 220, 320, 420 and 520 may be used in other types of gas turbine engines including turboshaft and turbofan gas turbine engines. It is also understood that aircraft firewall feedthrough devices 12, 120, 220, 320, 420 and 520 may be used in various locations within a mobile platform (e.g., aircraft or other vehicles) or other applications.

Gas turbine engine 10 may be an aircraft engine of a type preferably provided for use in subsonic flight to drive a load such as propeller 14 via low-pressure shaft 16 (sometimes called "power shaft") coupled to low-pressure turbine 18. Low-pressure turbine 18 and low-pressure shaft 16 may be part of a first spool of gas turbine engine 10 known as a low-pressure spool. Gas turbine engine 10 may include a second or high-pressure spool including high-pressure turbine 20, (e.g., multistage) compressor 22 and high-pressure shaft 24.

Compressor 22 may draw ambient air into gas turbine engine 10 via annular radial air inlet duct 26, increase the pressure of the drawn air and deliver the pressurized air to combustor 28 where the pressurized air is mixed with fuel and ignited for generating an annular stream of hot combustion gas. High-pressure turbine 20 may extract energy from the hot expanding combustion gas and thereby drive compressor 22. The hot combustion gases leaving high-pressure turbine 20 may be accelerated as it further expands, flows through and drives low pressure turbine 18. The combustion gas may then exit gas turbine engine 10 via exhaust duct 30.

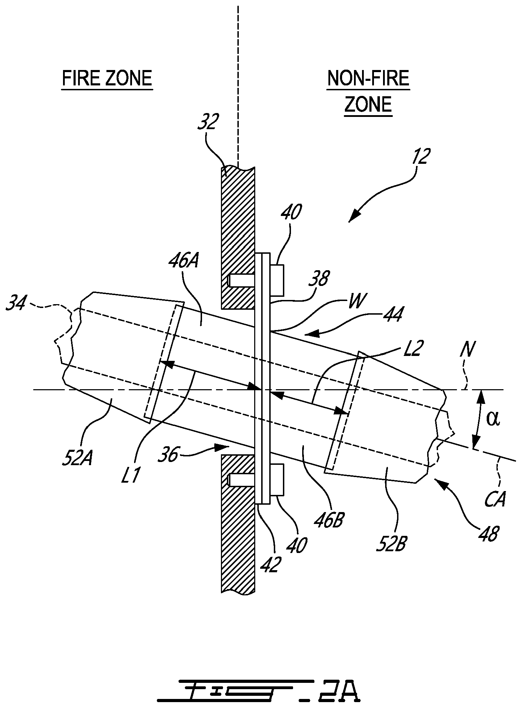

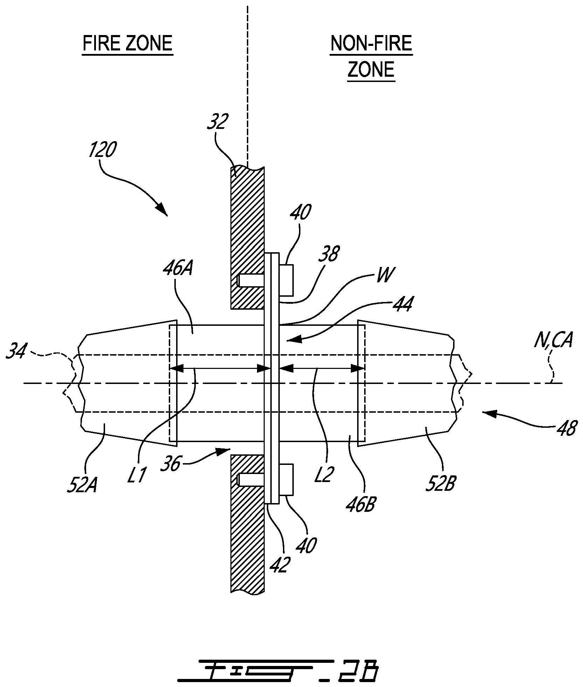

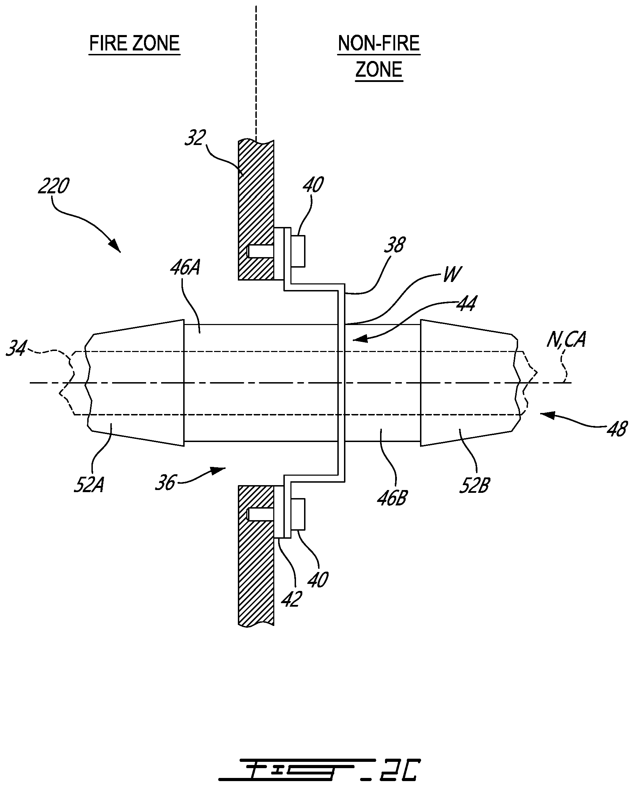

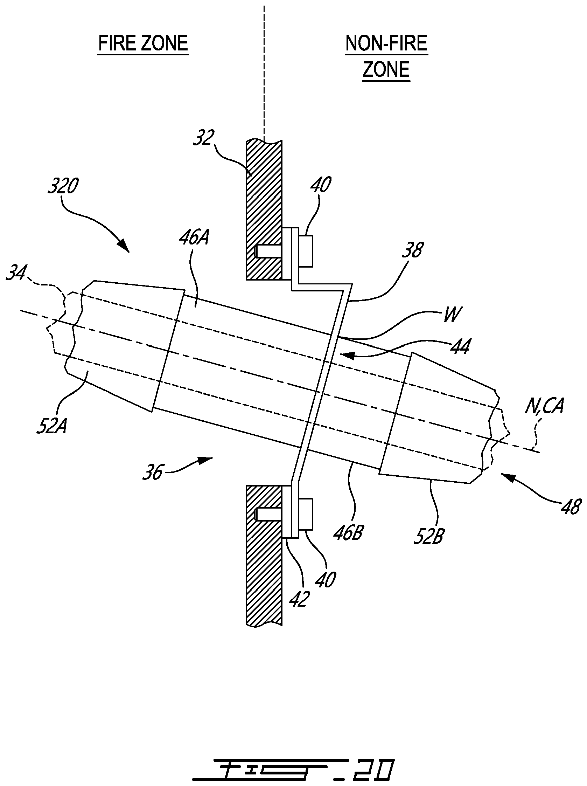

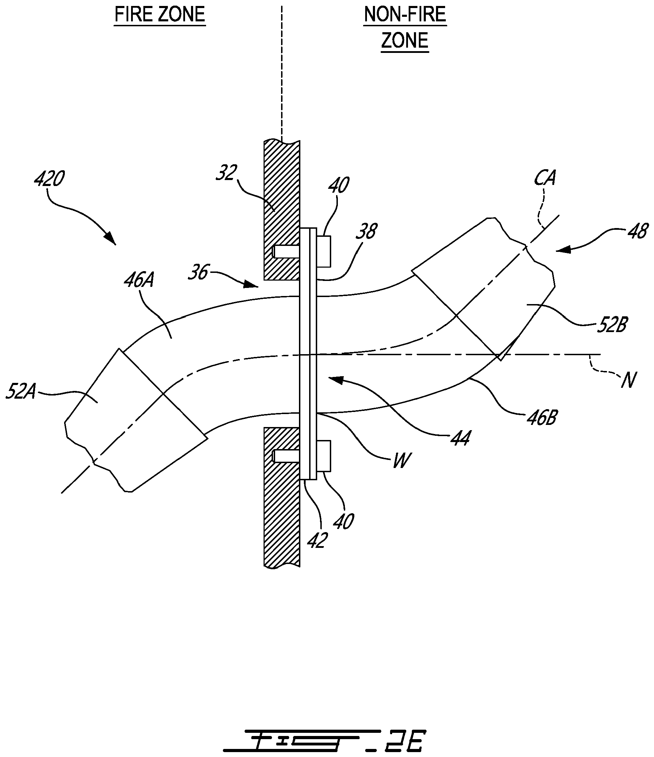

Gas turbine engine 10 may include one or more firewalls 32 (referred hereinafter in the singular) having one or more feedthrough members 34 (shown in FIG. 2) extending through firewall 32 via suitable aircraft firewall feedthrough device(s) 12, 120, 220, 320, 420 and 520. Devices 12, 120, 220, 320, 420 and 520 may sealingly accommodate feedthrough member(s) 34 through firewall 32. Firewall 32 may be a barrier disposed between a fire zone and a non-fire zones of engine 10. Firewall 32 may include any suitable partition made of relatively fireproof material and that hinders/prevents the spread of a fire from one part (e.g., fire zone) of engine 10 to another part (e.g., non-fire zone). Firewall 32 may also hinder/prevent the spread of fluid (e.g., liquid, gas, vapor) from one part of engine 10 to another part. In some embodiments, firewall 32 may be made from a suitable metallic material. In an aircraft, firewall 32 may isolate one or more engines 10 from other parts of the airframe. Firewall 32 may be oriented vertically, horizontally or at any other orientation.

FIG. 2A is a schematic illustration of an exemplary aircraft firewall feedthrough device 12 attached to firewall 32. It is understood that device 12 may be used with other types of walls that are not intended to serve as firewalls. Device 12 may be used in conjunction with feedthrough member 34 extending through aperture 36 through firewall 32. In various embodiments, feedthrough member 34 may be an elongated tubular member representing either a fluid-carrying conduit (e.g., hose, tube), a wire harness, one or more electric cables, or one or more wires. In other words, feedthrough member 34 may include one or more utility conduits that provide fluid (e.g., compressed air, fuel, oil) and/or electrical communication across firewall 32. In some embodiments, feedthrough member 34 such as a fluid-carrying metallic tubing could provide both fluid and electric communication across firewall 32. In some embodiments, device 12 may be used in conjunction with two or more feedthrough members 34 of the same or of different types (e.g., fluid, electric) so as to provide fluid and/or electric communication across firewall 32 via the same device 12.

Device 12 includes plate 38 configured to be attached to firewall 32 via one or more bolts 40 and/or other suitable means. Depending on the specific environmental conditions in which device 12 is installed, plate 38 may be made from a suitable metallic material (e.g., steel, aluminum, titanium), polymeric material or fiber-reinforced composite material. When attached to firewall 32, a suitable metallic material having acceptable fire/heat resistance may be used. Bolts 40 may extend through fastener holes formed in plate 38 and be threaded into firewall 32 in order to secure plate 38 to firewall 32.

In some applications, plate 38 may be attached directly to firewall 32. Alternatively, in some embodiments, gasket 42 may be disposed and compressed between plate 38 and firewall 32 in a sandwich configuration in order to form a seal between firewall 32 and a side of plate 38 facing toward firewall 32. Gasket 42 may be made of a material that is softer than plate 38 to permit some deformation of gasket 42 when compressed between plate 38 and firewall 32. Gasket 42 may be made from any material suitable for the applicable environmental conditions. In various embodiments, gasket 42 may be made from rubber, silicone, metal, cork, felt, neoprene, nitrile rubber, fiberglass, polytetrafluoroethylene (otherwise known as PTFE or Teflon) or a plastic polymer (such as polychlorotrifluoroethylene) for example. In various embodiments, gasket 42 may be provided in sheet form and cut to a suitable shape and size to provide a seal surrounding aperture 36 extending through firewall 32. Alternatively or in addition, a suitable sealant such as room temperature vulcanizing (RTV) silicone sealant may be used to provide a seal between plate 38 and firewall 32.

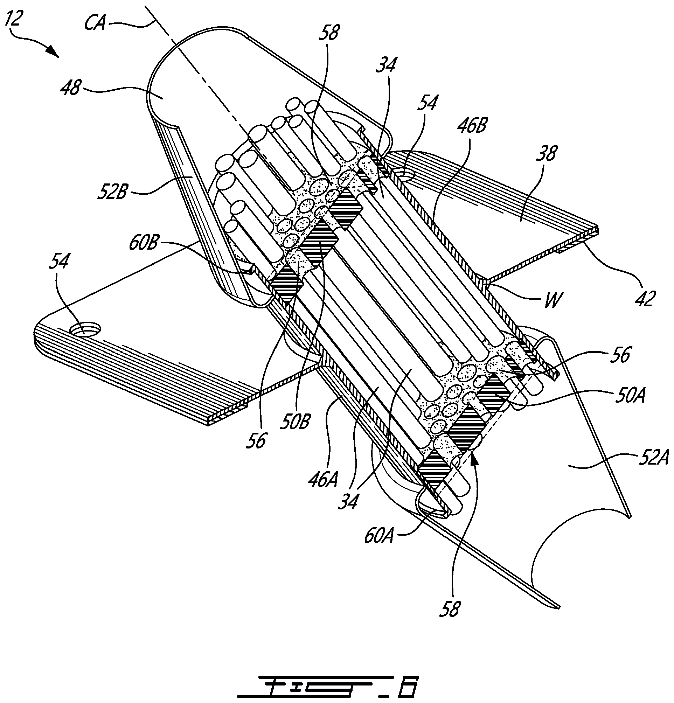

Plate 38 includes feedthrough aperture 44 extending therethrough for communication with aperture 36 of firewall 32. Device 12 includes first tubular portion 46A extending from a first side of plate 38 and second tubular portion 46B extending from a second side of plate 38 opposite the first side. Plate 38 may have the form of a flange projecting (e.g., radially) outwardly from a tube cooperatively defined by first tubular portion 46A and second tubular portion 46B. Plate 38 may extend partially or fully around such tube. First tubular portion 46A, second tubular portion 46B and feedthrough aperture 44 cooperatively define a through passage 48 for accommodating feedthrough member(s) 34. Device 12 also includes one or more grommets 50A, 50B (shown in FIG. 6) retained inside through passage 48 and grommet(s) 50A, 50B each include one or more holes for accommodating feedthrough member(s) 34 through grommet(s) 50A, 50B.

When device 12 is installed on firewall 32, first tubular portion 46A may extend through firewall 32 and second tubular portion 46B may extend away from firewall 32. First tubular portion 46A may extend from plate 38 by a distance L1 and second tubular portion 46B may extend from plate 38 by a distance L2 where distances L1 and L2 are measured along central axis CA of passage 48. Central axis CA may also be a longitudinal axis of passage 48. Central axis CA may intersect or be offset from a central axis of aperture 36 through firewall 32. In various embodiments, distances L1 and L2 may be different or substantially identical depending on specific installation constraints or requirements.

In some embodiments, central axis CA of passage 48 may be oblique to a normal N of plate 38. In various embodiments, central axis CA of passage 48 may be oriented at a non-zero angle α of normal N. In some embodiments, first tubular portion 46A and second tubular portion 46B may be substantially coaxial. In various embodiments, each of tubular portions 46A, 46B may have a circular, square, oval, rectangular or other cross-sectional profile. In various embodiments, plate 38 may be flat, curved or embossed to accommodate firewalls 32 of various shapes including flat/planar and dome-shaped for example. In various embodiments, tubular portions 46A, 46B may be substantially straight or may be curved to defined a curved passage 48 for accommodating one or more feedthrough members 34.

In some embodiments, first tubular portion 46A and second tubular portion 46B may be separate tubing pieces that are assembled with plate 38 via welding, brazing or other suitable method. In some embodiments, first tubular portion 46A and second tubular portion 46B may be part of a single piece of tubing (i.e., of a unitary construction) that extends through plate 38 and that is welded to plate 38 at location W for example. Alternatively, plate 38 and tubular portions 46A, 46B may be cast and/or machined, produced by additive manufacturing or injection molding depending on the material used. In some embodiments, plate 38 and tubular portions 46A, 46B may be made from the same type of metallic material.

FIG. 2A also shows jacket portions 52A, 52B respectively attached to opposing ends of tubular portions 46A, 46B. Jacket portions 52A, 52B may be a cover/shield of feedthrough member(s) 34 that has been interrupted along the length of feedthrough member(s) 34 at the location of device 12. In some embodiments, jacket portions 52A, 52B may be a metallic overbraid providing suitable shielding (e.g., from electromagnetic interference (EMI) and/or from radio frequency interference (RFI)) to a wire harness. In various situations, metallic tubular portions 46A, 46B may serve as a bridge providing suitable continuity of the shielding/covering provided by jacket portions 52A, 52B. Jacket portions 52A, 52B may extend over the distal ends of the respective tubular portions 46A, 46B and attached thereto using suitable clamps, cable ties, heat shrink tubes or tape for example. Jacket portions 52A, 52B may be electrically coupled to the respective tubular portions 46A, 46B. According to the claimed invention, tubular portions 46A, 46B are made from an electrically conductive material and provide electric continuity between jacket portions 52A, 52B. In some embodiments, materials of feedthrough device 12 may be electrically conductive so that electrical continuity is provided between jacket portion(s) 52A and/or 52B, and firewall 32 via tubular portion(s) 46A and/or 46B, plate 38 and bolt(s) 40 for electrical grounding purpose.

FIG. 2B is a schematic illustration of another exemplary aircraft firewall feedthrough device 120 attached to firewall 32. Device 120 may have some or all elements of device 12 described herein and like elements are identified using like reference characters. In contrast with device 12, through passage 48 defined by tubular portions 46A, 46B and feedthrough aperture 44 extending through plate 38 may be orientated to be substantially perpendicular to plate 38. In other words, central axis CA of passage 48 may be substantially parallel to normal N of plate 38.

FIG. 2C is a schematic illustration of another exemplary aircraft firewall feedthrough device 220 attached to firewall 32. Device 220 may have some or all elements of device 12 described herein and like elements are identified using like reference characters. In contrast with device 12, plate 38 may be part of a bracket structure serving to secure device 220 to firewall 32. In some embodiments, plate 38 may be offset from firewall 32 along normal N of plate 38 and substantially parallel to firewall 32.

FIG. 2D is a schematic illustration of another exemplary aircraft firewall feedthrough device 320 attached to firewall 32. Device 320 may have some or all elements of device 12 described herein and like elements are identified using like reference characters. In contrast with device 12, plate 38 may be part of a bracket structure serving to secure feedthrough device 320 to firewall 32. In some embodiments, plate 38 may be non-parallel to firewall 32. In some embodiments, central axis CA of through passage 48 may be oriented obliquely (i.e., non-normal) to firewall 32 and be substantially parallel to normal N of plate 38.

FIG. 2E is a schematic illustration of another exemplary aircraft firewall feedthrough device 420 attached to firewall 32. Device 420 may have some or all elements of device 12 described herein and like elements are identified using like reference characters. In contrast with device 12, one or both tubular portions 46A, 46B may be curved to provide a non-linear through passage 48 for accommodating feedthrough member 34 (not shown in FIG. 2E). In some embodiments, central axis CA of through passage 48 may be non-linear.

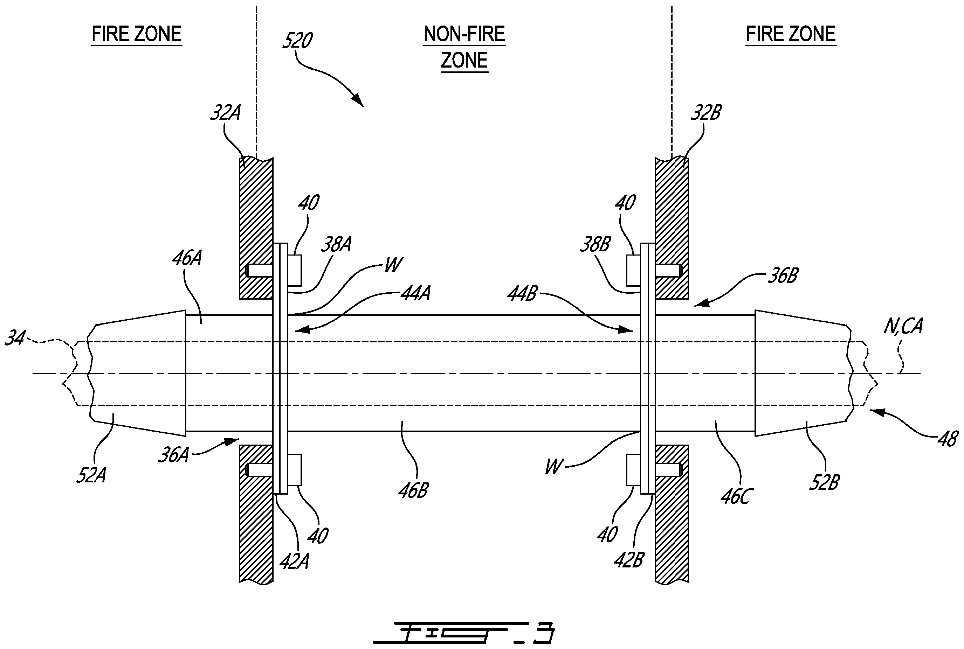

FIG. 3 is a schematic illustration of another exemplary aircraft firewall feedthrough device 520 attached to two firewalls 32A, 32B and extending therebetween. Device 520 may have some or all elements of device 12 described herein and like elements are identified using like reference characters. In contrast with device 12, device 520 may have a dual-plate configuration including plates 38A, 38B being spaced apart from each other and secured to respective firewalls 32A, 32B via respective gaskets 42A, 42B. First tubular portion 46A may extend through aperture 36A, and third tubular portion 46C may extend through aperture 36B. Second tubular portion 46B may extend between and interconnect plates 38A, 38B so that first, second and third tubular portions 46A, 46B and 46C may cooperatively define through passage 48. In some embodiments, first, second and third tubular portions 46A, 46B and 46C may be coaxial and linear so that central axis CA may also be linear. However, it is understood that aspects of other feedthrough devices 120, 220, 320 and 420 disclosed herein may also be applied to feedthrough device 520.

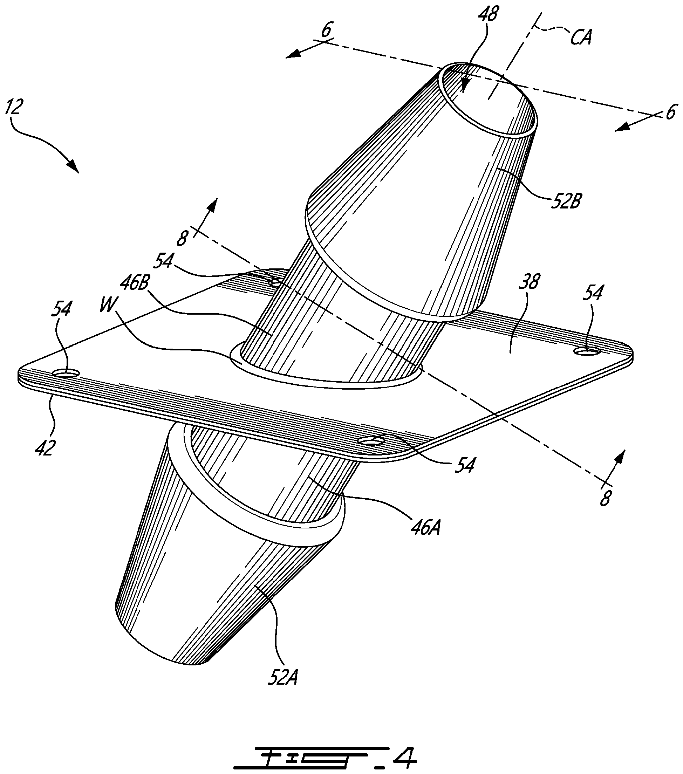

FIG. 4 is a perspective view of aircraft firewall feedthrough device 12 described above with firewall 32 and feedthrough element 34 omitted for clarity. Jacket portions 52A, 52B are shown in FIG. 4. In some embodiments, plate 38 may have a rectangular or square shape and may have a fastener hole 54 at each corner thereof for accommodating bolts 40 shown in FIG. 2. It is understood that plate 38 may have a circular, polygonal or other shape. It is understood that fastener holes 54 may be provided according to any suitable bolt pattern.

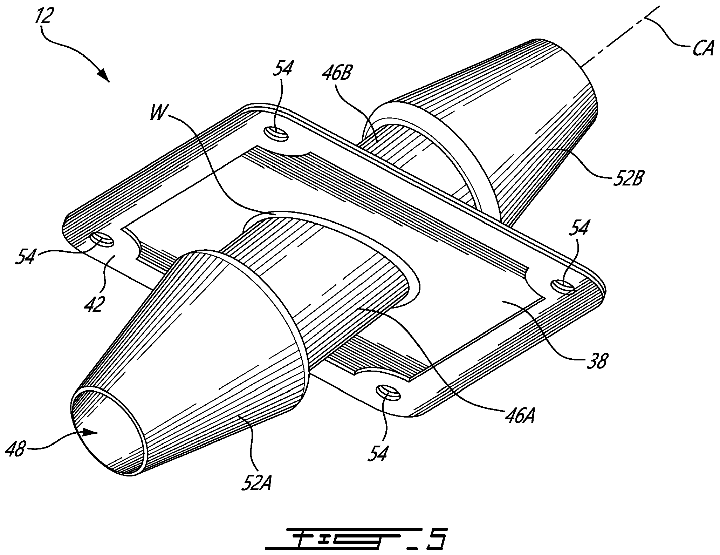

FIG. 5 is another perspective view of aircraft firewall feedthrough device 12 described above with firewall 32 and feedthrough element 34 omitted for clarity. Jacket portions 52A, 52B are shown in FIG. 5. FIG. 5 shows a firewall-facing side of plate 38 with an exemplary gasket 42 disposed thereon. In various embodiments, weld(s) W may be disposed on both sides of plate 38.

FIG. 6 is a cross-sectional view of aircraft firewall feedthrough device 12 of FIG. 2A taken along line 6-6 in FIG. 4. It is understood that elements described below are also applicable to other embodiments aircraft firewall feedthrough devices described herein. Device 12 includes one or more grommets 50A, 50B retained inside through passage 48 and grommet(s) 50A, 50B each include one or more holes 56 for accommodating one or more feedthrough members 34 through grommets 50A, 50B. In some embodiments, grommets 50A, 50B may be made from an elastomeric material. In various embodiments, grommets 50A, 50B may be rubber, plastic or plastic coated metal grommets. Grommet 50A may be disposed inside first tubular portion 46A and grommet 50B may be disposed inside second tubular portion 46B. For example, grommet 50A may be disposed at or near a distal end of first tubular portion 46A distal of plate 38. Similarly, grommet 50B may be disposed at or near a distal end of second tubular portion 46B distal of plate 38. Accordingly, grommets 50A, 50B may be axially spaced apart along central axis CA of passage 48.

The embodiment shown illustrates a plurality of feedthrough members 34 extending through both grommets 50A, 50B. However, embodiments having a sole feedthrough member 34 are also contemplated. In an electrical feedthrough application, each feedthrough member 34 may be a single wire or multiple (e.g., two, three or more) wires grouped together (e.g., cable or multiple cables), which may or may not be part of a larger wire harness for example.

In some embodiments, outer surfaces of grommets 50A, 50B may be tight-fitting (e.g., provide an interference fit) with the inside of tubular portions 46A, 46B. Similarly, inner surfaces of holes 56 of grommets 50A, 50B may be loose or tight-fitting (e.g., provide an interference fit) around respective feedthrough members 34 and may provide some sealing function to prevent or hinder the entry of dirt, air, water, etc. through firewall 32 via passage 48. In some embodiments, one or more circlips, also known as C-clips, may be used to retain one or more feedthrough members 34 and/or grommets 50A, 50B with respect to tubular portions 46A, 46B.

In some situations the use of one or more grommets 50A, 50B may provide acceptable sealing function. However, in some applications, some supplemental sealing may be required to provide an acceptable sealing performance. In some firewall applications, it may be desirable to provide a enhanced sealing performance to prevent flame and/or vapor migration from one side of firewall 32 to the other. Such supplemental sealing may be provided by way of sealant 58 applied to one or both sides of grommet 50A and/or to one or both sides of grommet 50B to provide supplemental sealing between feedthough members 34 and the inside of tubular portions 46A, 46B. In some embodiments, sealant 58 may be poured inside of tubular portion 46A, 46B in a liquid state so as to flow around feedthrough members 34, fill gaps and free holes 56 if applicable, and then allowed to cure and form a seal. In some embodiments, sealant 58 may be RTV silicone applied as a liquid silicone compound that cures at room temperature to form a flexible rubber. In various embodiments, sealant 58 may be an adhesive sealant, moulding rubber or electronic encapsulating compound. Sealant 58 may be applied to one or both axial faces of one or more grommet(s) 50A, 50B. In some embodiments, sealant 58 may provide a suitable vapor barrier.

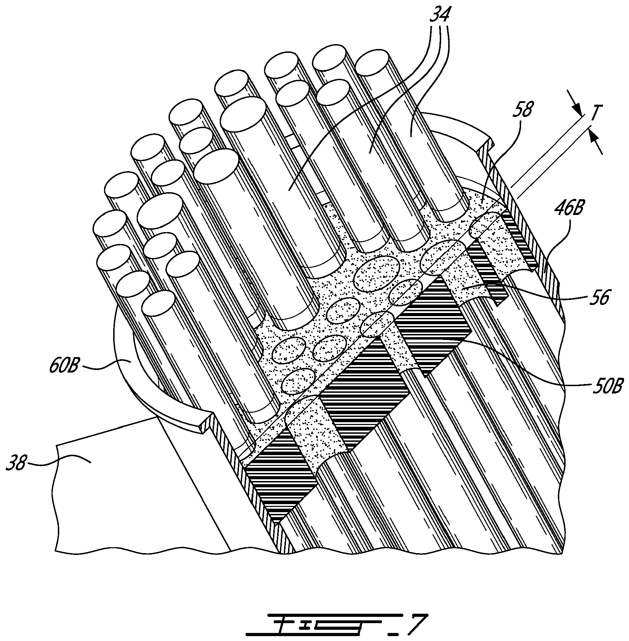

FIG. 7 is an enlarged cross-sectional view of a portion of device 12 of FIG. 2A taken along line 6-6 of FIG. 4. FIG. 7 shows the layer of sealant 58 having a thickness T. Thickness T may differ for different types of sealant use and sealing performance desired.

According to the claimed invention, second tubular portion 46B has second anchoring feature 60B for engagement with jacket portion 52B for facilitating the attachment of jacket portion 52B (shown in FIG, 6) to second tubular portion 46B during installation. Second anchoring feature 60B may include a flange, ridge, lip, boss or other suitable feature protruding radially outwardly from a body of second tubular portion 46B. Alternatively or in addition, second anchoring feature 60B may include a (e.g., partially or fully) circumferential groove, track, channel or other suitable recess formed in second tubular portion 46B. Second anchoring feature 60B is disposed at or near a distal end of second tubular portion 46B distal from plate 38.

During installation, jacket portion 52B (e.g., overbraid) may be slipped over second tubular portion 46B and over second anchoring feature 60, and secured to second anchoring feature 60 using a cable tie, clamp, heat shrink tube or tape. It is understood that first tubular portion 46A also has first anchoring feature 60A (shown in FIG. 6) that may be of the same type or different type as second anchoring feature 60B.

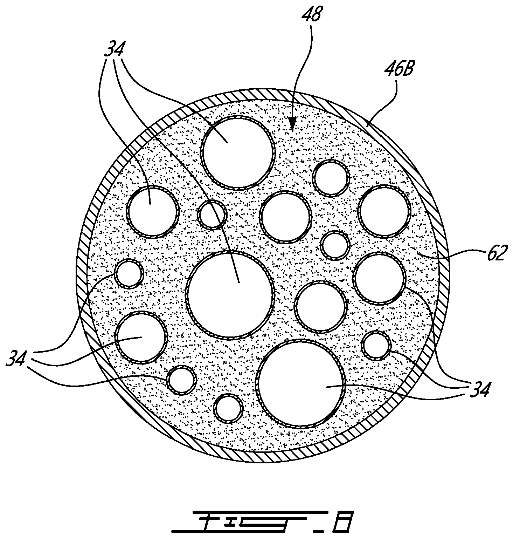

FIG. 8 is an enlarged cross-sectional view of a portion of aircraft firewall feedthrough device 12 of FIG. 2A taken along line 8-8 of FIG. 4. FIG. 8 shows a cross-sectional view across second tubular portion 46B with a plurality of feedthrough members 34 of various sizes extending through passage 48. In some embodiments, it may be desirable to at least partially fill the space inside passage 48, surrounding feedthrough member(s) 34 (e.g., wires or wire groups) and axially between first grommet 50A and second grommet 50B with a suitable support material 62 to provide support for feedthrough member(s) 34. Such support material 62 may be beneficial in applications subjected to vibrations where support material 62 may hinder/prevent wear of feedthrough member(s) 34 due to fretting for example. Support material 62 may include any suitable substance or component. In some embodiments, support material 62 may include a suitable compound (e.g., putty) of doughlike consistency when fresh and that is allowed to cure.

Aircraft firewall feedthrough device 12 may be integrated into a wire harness and at the proper location along the wire harness, and then simply attached to firewall 32 at the time of installing the wire harness into engine 10 or other system. During assembly of a wire harness for example, and in reference to FIG. 6, individual wires or groups of wires may be inserted through grommets 50A, 50B and also through tubular portions 46A, 46B and then grommets 50A, 50B may be inserted (e.g., press-fitted) into tubular portions 46A, 46B. Support material 62 may be inserted into the space between grommets 50A, 50B after inserting grommet 50A into tubular portion 46A and before inserting grommet 50B into tubular portion 46B. Sealant 58 may then be applied to the axially-outer faces of grommets 50A, 50B. Jacket portions 52A, 52B may then be attached to respective tubular portions 46A, 46B.

The embodiments described in this document provide non-limiting examples of possible implementations of the present technology. Upon review of the present disclosure, a person of ordinary skill in the art will recognize that changes may be made to the embodiments described herein without departing from the scope of the invention as defined in the appended claims. For example, it is understood that some embodiments of aircraft firewall feedthrough devices 12, 120, 220, 320, 420 and 520 may be suitable for firewall feedthrough applications in aircraft (e.g., gas turbine) engines and that some embodiments of aircraft firewall feedthrough devices 12, 120, 220, 320, 420 and 520 may be suitable for other (e.g., less stringent) feedthrough applications.

## Claims

1. An aircraft firewall feedthrough device (12, 120, 220, 320, 420, 520) for accommodating a feedthrough member (34) through an aperture (36) of a firewall (32) of an aircraft, the aircraft firewall feedthrough device comprising
a plate (38) configured to be attached to the firewall, the plate including: a feedthrough aperture (44);
a first side for facing toward the firewall; and a second side opposite the first side;
a first tubular portion (46A) extending from the first side of the plate;
a second tubular portion (46B) extending from the second side of the plate, wherein the first tubular portion, the second tubular portion and the feedthrough aperture cooperatively defining a through passage (48) for accommodating the feedthrough member through the aperture of the firewall and
a grommet (50A, 50B) retained inside the through passage, the grommet including a hole for accommodating the feedthrough member through the grommet,
wherein a distal end of the first tubular portion distal from the plate includes a first anchoring feature (60A) for engagement with a first jacket portion (52A) of the feedthrough member
**characterised in that**
a distal end of the second tubular portion distal from the plate includes a second anchoring feature (60B) for engagement with a second jacket portion (52B) of the feedthrough member, and
the first tubular portion and the second tubular portion are made from an electrically conductive material and provide electric continuity between the distal end of the first tubular portion and the distal end of the second tubular portion.

2. The aircraft firewall feedthrough device as defined in claim 1, wherein:
the grommet is a first grommet (50A) and the hole is a first hole; and
the device includes a second grommet (50B) spaced apart from the first grommet, the second grommet including a second hole for accommodating the feedthrough member,
wherein a space inside the through passage surrounding the feedthrough member and between the first and second grommets contains a support material (62) for supporting the feedthrough member.

3. The aircraft firewall feedthrough device as defined in claim 1 or 2, wherein the grommet includes a plurality of holes for accommodating respective ones of a plurality of feedthrough members.

4. The aircraft firewall feedthrough device as defined in any preceding claim, comprising a sealant (58) applied to the grommet for forming a seal around the feedthrough member

5. The aircraft firewall feedthrough device as defined in any preceding claim, wherein:
the first tubular portion has a central axis (CA) that is oblique to the plate; and/or
the first tubular portion has a non-linear central axis.

6. The aircraft firewall feedthrough device as defined in any preceding claim, wherein the first tubular portion and the second tubular portion are substantially coaxial.

7. The aircraft firewall feedthrough device as defined in any preceding claim, wherein:
the plate is a first plate (38A) configured to be attached to a first firewall (32A);
the aircraft firewall feedthrough device includes a second plate (38B) configured to be attached to a second firewall (32B);
the second tubular portion (46B) extends between and interconnects the first and second plates and
the through passage extends through the second plate.

8. The aircraft firewall feedthrough device as defined in any preceding claim, wherein the first and second tubular portions are part of a single tube of unitary construction that is extending though the plate.

9. An aircraft firewall feedthrough device as defined in any preceding claim, wherein the grommet includes a plurality of holes for accommodating respective wires or wire groups of a wire harness.

10. The aircraft firewall feedthrough device as defined in claim 9, comprising a sealant (58) applied to the grommet for sealing the wires or wire groups.

11. The aircraft firewall feedthrough device as defined in claim 9 or 10, wherein:
the grommet is a first grommet (50A) retained in the first tubular portion and the holes are first holes; and
the device includes a second grommet (50B) retained in the second tubular portion and spaced apart from the first grommet, the second grommet including a plurality second holes for accommodating the respective wires or wire groups of the wire harness.

12. The aircraft firewall feedthrough device as defined in claim 11, wherein a space inside the through passage surrounding the wires or wire groups and between the first and second grommets contains a support material (62) for supporting the wires or wire groups.

13. A wire harness comprising the aircraft firewall feedthrough device as defined in any preceding claim.

14. An aircraft engine (10) comprising the aircraft firewall feedthrough device as defined in any of claims 1-12, or the wire harness as defined in claim 13.

15. An aircraft engine (10) comprising:
a firewall configured to hinder the spread of fire from a first part of the aircraft engine to a second part of the aircraft engine, the firewall having an aperture therethrough;
a feedthrough member extending from the first part to the second part of the aircraft engine via the aperture of the firewall; and
an aircraft firewall feedthrough device as defined in any of claims 1-12 forming a seal between the feedthrough member and the firewall,
wherein:
the first jacket portion includes a first overbraid portion engaged with the first anchoring feature;
the second jacket portion includes a second overbraid portion engaged with the second anchoring feature; and
the first tubular portion and the second tubular portion provide electric continuity between the first overbraid portion and the second overbraid portion.

## Patentansprüche

1. Durchgangsvorrichtung für Flugzeugbrandwand (12, 120, 220, 320, 420, 520) zur Aufnahme eines Durchgangselements (34) durch eine Öffnung (36) einer Brandwand (32) eines Luftfahrzeugs, wobei die Durchgangsvorrichtung für Flugzeugbrandwand Folgendes umfasst:
eine Platte (38), die so konfiguriert ist, dass sie an der Brandwand befestigt werden kann, wobei die Platte Folgendes beinhaltet: eine Durchgangsöffnung (44);
eine erste Seite, die der Brandwand zugewandt ist; und eine zweite Seite, die der ersten Seite gegenüberliegt;
einen ersten röhrenförmigen Abschnitt (46A), der sich von der ersten Seite der Platte aus erstreckt;
einen zweiten röhrenförmigen Abschnitt (46B), der sich von der zweiten Seite der Platte erstreckt, wobei der erste röhrenförmige Abschnitt, der zweite röhrenförmige Abschnitt und die Durchgangsöffnung zusammen einen Durchgangsdurchgang (48) zur Aufnahme des Durchgangselements durch die Öffnung der Brandwand definieren; und
eine Tülle (50A, 50B), die im Inneren des Durchgangsdurchgangs gehalten wird, wobei die Tülle ein Loch zur Aufnahme des Durchgangselements durch die Tülle beinhaltet,
wobei ein distales Ende des ersten rohrförmigen Abschnitts distal von der Platte ein erstes Verankerungsmerkmal (60A) zum Eingriff mit einem ersten Mantelabschnitt (52A) des Durchgangselements beinhaltet;
**dadurch gekennzeichnet, dass**
ein distales Ende des zweiten rohrförmigen Abschnitts distal von der Platte ein zweites Verankerungsmerkmal (60B) zum Eingriff mit einem zweiten Mantelabschnitt (52B) des Durchgangselements beinhaltet, und
der erste röhrenförmige Abschnitt und der zweite röhrenförmige Abschnitt aus einem elektrisch leitenden Material hergestellt sind und eine elektrische Kontinuität zwischen dem distalen Ende des ersten röhrenförmigen Abschnitts und dem distalen Ende des zweiten röhrenförmigen Abschnitts bereitstellen.

2. Durchgangsvorrichtung für Flugzeugbrandwand nach Anspruch 1, wobei:
die Tülle eine erste Tülle (50A) ist und das Loch ein erstes Loch ist; und
die Vorrichtung eine zweite Tülle (50B) enthält, die von der ersten Tülle beabstandet ist, wobei die zweite Tülle ein zweites Loch zur Aufnahme des Durchgangselements beinhaltet,
wobei ein Raum innerhalb des Durchgangdurchgangs, der das Durchgangselement umgibt, und zwischen der ersten und der zweiten Tülle ein Trägermaterial (62) zum Abstützen des Durchgangselements enthält.

3. Durchgangsvorrichtung für Flugzeugbrandwand nach Anspruch 1 oder 2, wobei die Tülle eine Vielzahl von Löchern zur Aufnahme von entsprechenden Durchgangselementen aus einer Vielzahl von Durchgangselementen beinhaltet.

4. Durchgangsvorrichtung für Flugzeugbrandwand nach einem der vorhergehenden Ansprüche, umfassend ein Dichtungsmittel (58), das auf die Tülle aufgebracht ist, um eine Dichtung um das Durchgangselement zu bilden.

5. Durchgangsvorrichtung für Flugzeugbrandwand nach einem der vorhergehenden Ansprüche, wobei:
der erste röhrenförmige Abschnitt eine Mittelachse (CA) aufweist, die schräg zur Platte verläuft; und/oder
der erste röhrenförmige Abschnitt eine nicht-lineare Mittelachse aufweist.

6. Durchgangsvorrichtung für Flugzeugbrandwände nach einem der vorhergehenden Ansprüche, wobei der erste rohrförmige Abschnitt und der zweite rohrförmige Abschnitt im Wesentlichen koaxial sind.

7. Durchgangsvorrichtung für Flugzeugbrandwand nach einem der vorhergehenden Ansprüche, wobei:
die Platte eine erste Platte (38A) ist, die so konfiguriert ist, dass sie an einer ersten Brandwand (32A) befestigt werden kann;
die Durchgangsvorrichtung für Flugzeugbrandwand eine zweite Platte (38B) beinhaltet, die so konfiguriert ist, dass sie an einer zweiten Brandwand (32B) befestigt werden kann;
der zweite röhrenförmige Abschnitt (46B) sich zwischen der ersten und der zweiten Platte erstreckt und diese miteinander verbindet; und
der Durchgangsdurchgang sich durch die zweite Platte erstreckt.

8. Durchgangsvorrichtung für Flugzeugbrandwand nach einem der vorhergehenden Ansprüche, wobei die ersten und zweiten röhrenförmigen Abschnitte Teil eines einzigen Rohrs mit einheitlicher Konstruktion sind, das sich durch die Platte erstreckt.

9. Durchgangsvorrichtung für Flugzeugbrandwand nach einem der vorhergehenden Ansprüche, wobei die Tülle eine Vielzahl von Löchern zur Aufnahme der jeweiligen Drähte oder Drahtgruppen eines Kabelbaums beinhaltet.

10. Durchgangsvorrichtung für Flugzeugbrandwand nach Anspruch 9, umfassend ein auf die Tülle aufgebrachtes Dichtungsmittel (58) zum Abdichten der Drähte oder Drahtgruppen.

11. Durchgangsvorrichtung für Flugzeugbrandwand nach Anspruch 9 oder 10, wobei:
die Tülle eine erste Tülle (50A) ist, die in dem ersten rohrförmigen Abschnitt gehalten wird, und die Löcher erste Löcher sind; und
die Vorrichtung eine zweite Tülle (50B) beinhaltet, die in dem zweiten röhrenförmigen Abschnitt gehalten wird und von der ersten Tülle beabstandet ist, wobei die zweite Tülle eine Vielzahl zweiter Löcher zur Aufnahme der jeweiligen Drähte oder Drahtgruppen des Kabelbaums beinhaltet.

12. Durchgangsvorrichtung für Flugzeugbrandwand nach Anspruch 11, wobei ein Raum innerhalb des Durchgangdurchgangs, der die Drähte oder Drahtgruppen umgibt, und zwischen der ersten und der zweiten Tülle ein Trägermaterial (62) zum Stützen der Drähte oder Drahtgruppen enthält.

13. Kabelbaum, der die Durchgangsvorrichtung für Flugzeugbrandwand umfasst, wie in einem der vorhergehenden Ansprüche definiert.

14. Luftfahrzeugtriebwerk (10), umfassend die Durchgangsvorrichtung für Flugzeugbrandwand nach einem der Ansprüche 1-12 oder den Kabelbaum nach Anspruch 13.

15. Luftfahrzeugtriebwerk (10), umfassend:
eine Brandwand, die so konfiguriert ist, dass sie die Ausbreitung von Feuer von einem ersten Teil des Luftfahrzeugtriebwerks zu einem zweiten Teil des Luftfahrzeugtriebwerks verhindert, wobei die Brandwand eine durchgehende Öffnung aufweist;
ein Durchgangselement, das sich von dem ersten Teil über die Öffnung der Brandwand zu dem zweiten Teil des Luftfahrzeugtriebwerks erstreckt; und
eine Durchgangsvorrichtung für Flugzeugbrandwand nach einem der Ansprüche 1-12, die eine Dichtung zwischen dem Durchgangselement und der Brandwand bildet,
wobei:
der erste Mantelabschnitt einen ersten überstehenden Abschnitt beinhaltet, der mit dem ersten Verankerungselement in Eingriff steht;
der zweite Mantelabschnitt einen zweiten überstehenden Abschnitt beinhaltet, der mit dem zweiten Verankerungselement in Eingriff steht; und
der erste röhrenförmige Abschnitt und der zweite röhrenförmige Abschnitt eine elektrische Kontinuität zwischen dem ersten Übergeflechtabschnitt und dem zweiten Übergeflechtabschnitt bereitstellen.

## Revendications

1. Dispositif de passage de pare-feu d'aéronef (12, 120, 220, 320, 420, 520) pour recevoir un élément de passage (34) par le biais d'une ouverture (36) d'un pare-feu (32) d'un aéronef, le dispositif de passage de pare-feu d'aéronef comprenant :
une plaque (38) configurée pour être fixée au pare-feu, la plaque comprenant : une ouverture de passage (44) ;
un premier côté orienté vers le pare-feu ; et un second côté opposé au premier côté ;
une première partie tubulaire (46A) s'étendant à partir du premier côté de la plaque ;
une seconde partie tubulaire (46B) s'étendant à partir du second côté de la plaque, dans lequel la première partie tubulaire, la seconde partie tubulaire et l'ouverture de passage définissent de manière coopérative un passage traversant (48) pour recevoir l'élément de passage par le biais de l'ouverture du pare-feu ; et
un passe-fil (50A, 50B) retenu à l'intérieur du passage traversant, le passe-fil comprenant un trou pour recevoir l'élément de passage par le biais du passe-fil,
dans lequel une extrémité distale de la première partie tubulaire distale de la plaque comprend un premier élément d'ancrage (60A) destiné à venir en prise avec une première partie de gaine (52A) de l'élément de passage ;
**caractérisé en ce que**
une extrémité distale de la seconde partie tubulaire distale de la plaque comprend un second élément d'ancrage (60B) destiné à venir en prise avec une seconde partie de gaine (52B) de l'élément de passage, et
la première partie tubulaire et la seconde partie tubulaire sont constituées d'un matériau électriquement conducteur et assurent une continuité électrique entre l'extrémité distale de la première partie tubulaire et l'extrémité distale de la seconde partie tubulaire.

2. Dispositif de passage de pare-feu d'aéronef selon la revendication 1, dans lequel :
le passe-fil est un premier passe-fil (50A) et le trou est un premier trou ; et
le dispositif comprend un second passe-fil (50B) espacé du premier passe-fil, du second passe-fil comprenant un second trou pour recevoir l'élément de passage,
dans lequel un espace à l'intérieur du passage traversant entourant l'élément de passage et entre les premier et second passe-fils contient un matériau de support (62) pour supporter l'élément de passage.

3. Dispositif de passage de pare-feu d'aéronef selon la revendication 1 ou 2, dans lequel le passe-fil comprend une pluralité de trous pour recevoir ceux respectifs d'une pluralité d'éléments de passage.

4. Dispositif de passage de pare-feu d'aéronef selon une quelconque revendication précédente, comprenant un produit d'étanchéité (58) appliqué sur le passe-fil pour former un joint autour de l'élément de passage.

5. Dispositif de passage de pare-feu d'aéronef selon une quelconque revendication précédente, dans lequel :
la première partie tubulaire présente un axe central (CA) oblique par rapport à la plaque ; et/ou
la première partie tubulaire présente un axe central non linéaire.

6. Dispositif de passage de pare-feu d'aéronef selon une quelconque revendication précédente, dans lequel la première partie tubulaire et la seconde partie tubulaire sont sensiblement coaxiales.

7. Dispositif de passage de pare-feu d'aéronef selon une quelconque revendication précédente, dans lequel :
la plaque est une première plaque (38A) configurée pour être fixée à un premier pare-feu (32A) ;
le dispositif de passage de pare-feu d'aéronef comprend une seconde plaque (38B) configurée pour être fixée à un second pare-feu (32B) ;
la seconde partie tubulaire (46B) s'étend entre les première et seconde plaques et les interconnecte ; et
le passage traversant s'étend à travers la seconde plaque.

8. Dispositif de passage de pare-feu d'aéronef selon une quelconque revendication précédente, dans lequel les première et seconde parties tubulaires font partie d'un tube unique de construction unitaire qui s'étend à travers la plaque.

9. Dispositif de passage de pare-feu d'aéronef selon une quelconque revendication précédente, dans lequel le passe-fil comprend une pluralité de trous pour recevoir des fils ou groupes de fils respectifs d'un faisceau de câbles.

10. Dispositif de passage de pare-feu d'aéronef selon la revendication 9, comprenant un produit d'étanchéité (58) appliqué au passe-fil pour sceller les fils ou groupes de fils.

11. Dispositif de passage de pare-feu d'aéronef selon la revendication 9 ou 10, dans lequel :
le passe-fil est un premier passe-fil (50A) retenu dans la première partie tubulaire et les trous sont des premiers trous ; et
le dispositif comprend un second passe-fil (50B) retenu dans la seconde partie tubulaire et espacé du premier passe-fil, le second passe-fil comprenant une pluralité de seconds trous pour recevoir les fils ou groupes de fils respectifs du faisceau de câbles.

12. Dispositif de passage de pare-feu d'aéronef selon la revendication 11, dans lequel un espace à l'intérieur du passage traversant entourant les fils ou groupes de fils et entre les premier et second passe-fils contient un matériau de support (62) pour supporter les fils ou groupes de fils.

13. Faisceau de câbles comprenant le dispositif de passage de pare-feu d'aéronef selon une quelconque revendication précédente.

14. Moteur d'aéronef (10) comprenant le dispositif de passage de pare-feu d'aéronef selon l'une quelconque des revendications 1 à 12, ou le faisceau de câbles selon la revendication 13.

15. Moteur d'aéronef (10) comprenant :
un pare-feu configuré pour empêcher la propagation du feu depuis une première partie du moteur d'aéronef vers une seconde partie du moteur d'aéronef, le pare-feu étant traversé par une ouverture ;
un élément de passage s'étendant de la première partie à la seconde partie du moteur d'aéronef par le biais de l'ouverture du pare-feu ; et
un dispositif de passage de pare-feu d'aéronef selon l'une quelconque des revendications 1 à 12, formant un joint entre l'élément de passage et le pare-feu,
dans lequel :
la première partie de gaine comprend une première partie de sur-tresse en prise avec le premier élément d'ancrage ;
la seconde partie de gaine comprend une seconde partie de sur-tresse en prise avec le second élément d'ancrage ; et
la première partie tubulaire et la seconde partie tubulaire assurent une continuité électrique entre la première partie sur-tresse et la seconde partie sur-tresse.
